# EUROPÄISCHE PATENTSCHRIFT

(11) **EP 3 084 267 B1**
(45) Veröffentlichungstag und Bekanntmachung des Hinweises auf die Patenterteilung: **15.08.2018**
(21) Anmeldenummer: 14799164.0
(22) Anmeldetag: 18.11.2014
(51) Int. Cl.: F16H 57/021

(54) **KOMBINIERTE WÄLZ- UND GLEITLAGERUNG EINER GETRIEBEWELLE**
COMBINED ANTI-FRICTION AND PLAIN BEARING MOUNTING FOR A GEARBOX SHAFT
PALIERS À ROULEMENT ET PALIERS LISSES COMBINÉS POUR UN ARBRE DE TRANSMISSION

(30) Priorität: 18.12.2013 DE 102013226527
(43) Veröffentlichungstag der Anmeldung: 26.10.2016
(73) Patentinhaber: ZF Friedrichshafen AG, 88046 Friedrichshafen (DE); ZF Wind Power Antwerpen NV, 3920 Lommel (BE)
(72) Erfinder: LEIMANN, Dirk, B-2650 Edegem (BE); VAN DEN DONKER, Michiel, NL-5682 GM Best (NL); KIRSCHNER, Tino, 88048 Friedrichshafen (DE)
(86) Internationale Anmeldenummer: PCT/EP2014/074837
(87) Internationale Veröffentlichungsnummer: WO 2015/090791

(56) Entgegenhaltungen:
- EP-A1- 1 335 154
- GB-A- 339 723
- JP-A- S5 958 262
- JP-A- H07 151 212
- JP-A- 2013 096 563
- JP-U- S5 540 225
- JP-U- S6 077 848
- JP-U- S53 112 656
- JP-U- S62 151 468
- JP-Y- S4 934 269
- US-A1- 2013 104 681

## Beschreibung

Die vorliegende Erfindung betrifft die Lagerung einer Getriebewelle, insbesondere einer Getriebewelle eines Getriebes einer Windkraftanlage.

Zur Lagerung der Wellen der Stirnradstufe eines Getriebes einer Windkraftanlage sind Fest-Los-Lagerungen üblich. Sowohl das Festlager, als auch das Loslager bilden dabei Wälzlager. Das Festlager zur Aufnahme radialer und axialer Kräfte besteht dabei aus einem Paar angestellter Kegelrollenlager. Diese können vorgespannt sein, um zu verhindern, dass es zu Schlupf kommt und Black Spots entstehen. Als Loslager kommt üblicherweise ein Zylinderrollenlager zum Einsatz. Dieses wird ohne Vorlast betrieben. Daher ist insbesondere das Zylinderrollenlager anfällig für Beschädigungen.

Eine Möglichkeit, die Lagerung der Wellen robuster gegenüber Beschädigungen zu machen, stellen Gleitlager dar. So sind Lösungen für Windkraftgetriebe bekannt, bei denen sämtliche Wellen der Stirnradstufe vollständig gleitgelagert sind. Auch als Festlager kommen hier Gleitlager zum Einsatz. Gleitlager, die sowohl Kräfte in radialer, als auch in axialer Richtung aufnehmen können, sind allerdings sehr teuer.

Die Druckschriften GB 339 723 A und EP 1 335 154 A1 offenbaren eine Lagerung mit den Merkmalen des Oberbegriffs von Anspruch 1.

Aufgabe der vorliegenden Erfindung ist es, die Lagerung einer Getriebewelle so auszugestalten, dass die Nachteile der aus dem Stand der Technik bekannten Lösungen vermieden werden.

Der Erfindung liegt die Idee zugrunde, Wälzlager mit Gleitlagern auf einer einzigen Welle zu kombinieren. Sowohl Wälz-, als auch Gleitlager weisen jeweils spezifische Vor- und Nachteile auf. Bei der Kombination von Wälz- und Gleitlagern werden daher üblicherweise auch Kombinationen von Nachteilen realisiert. Durch die Erfindung wird aber eine Lagerung erreicht, bei der die Nachteile der einzelnen Lagerarten nicht zum Tragen kommen. Stattdessen profitiert die erfindungsgemäße Lagerung einer Getriebewelle wesentlich von den Vorteilen von Wälzlagern einerseits und Gleitlagern andererseits.
Eine erfindungsgemäße Getriebewelle ist mittels eines Festlagers und mindestens eines Loslagers gelagert. Das Festlager kann Radial- und Axialkräfte sowohl in positiver als auch in negativer Richtung aufnehmen. Es werden also sämtliche translatorischen Freiheitsgrade der Welle in dem Festlager beschränkt.
Das Loslager kann ausschließlich Radialkräfte, sowohl in positiver als auch in negativer Richtung aufnehmen. Das Loslager beschränkt also die translatorischen Freiheitsgrade der Welle in genau einer Richtung. Zusammen mit dem Festlager fixiert es die Welle zudem entlang ihrer Drehachse, d.h. es beschränkt die orthogonal zur Drehachse der Welle verlaufenden rotatorischen Freiheitsgrade der Welle.
In radialer Richtung zwischen dem Festlager und dem Loslager ist mindestens ein auf der Getriebewelle fixiertes Zahnrad angeordnet. Das Zahnrad ist starr mit der Getriebewelle verbunden. Die Drehachse des Zahnrads ist also identisch mit der Drehachse der Getriebewelle. Vorzugsweise handelt es sich um ein schrägverzahntes Zahnrad. Die Anordnung des Zahnrads in radialer Richtung zwischen dem Festlager und dem Loslager bedeutet, dass sich das Zahnrad in dem Zwischenraum zwischen dem Festlager und dem Loslager befindet. Insbesondere befinden sich die Orthogonalprojektionen von dem Zahnrad auf die Drehachse der Welle sämtlich zwischen den Orthogonalprojektionen des Loslagers auf die Drehachse der Welle und den Orthogonalprojektionen des Festlagers auf die Drehachse der Welle.

Das Loslager wird durch mindestens ein Gleitlager gebildet, vorzugsweise durch genau ein Gleitlager.

Erfindungsgemäß ist das Festlager als angestellte Lagerung ausgeführt. Eine angestellte Lagerung umfasst zwei Lager, die jeweils Kräfte in mindestens einer axialen Richtung aufnehmen können. Die beiden Richtungen der axialen Kraftaufnahme verlaufen dabei entgegengesetzt zueinander, d.h.

voneinander weg oder aufeinander zu. Vorzugsweise sind die zwei Lager spiegelbildlich zueinander angeordnet. Um das gewünschte Lagerspiel oder eine Vorspannung einzustellen, wird ein Lagerring - ein Innen- oder Außenring - eines der beiden Lager auf seinem Sitz verschoben und anschließen fixiert. Vorzugsweise werden zwei Kegelrollenlager verwendet. Diese können in O-Anordnung zueinander stehen, vorzugsweise aber in X-Anordnung.

Die Erfindungsgemäße Getriebewelle eignet sich insbesondere für die Verwendung in der Stirnradstufe eines Getriebes einer Windkraftanlage. Dabei kann die erfindungsgemäße Getriebewelle als Zwischenwelle eingesetzt werden. Als Zwischenwelle ist jede Welle zu verstehen, bei der es sich nicht um die Eingangs-, bzw. Antriebswelle oder die Ausgangs-, bzw. Abtriebswelle handelt.

Darüber hinaus kann die erfindungsgemäße Getriebewelle als Eingangs-, bzw. Antriebswelle und/oder als Ausgangs-, bzw. Abtriebswelle verwendet werden. Insbesondere die Verwendung als Eingangs-, bzw. Antriebswelle und/oder als Ausgangs-, bzw. Abtriebswelle in Verbindung mit einer Verwendung als Zwischenwelle ist möglich.

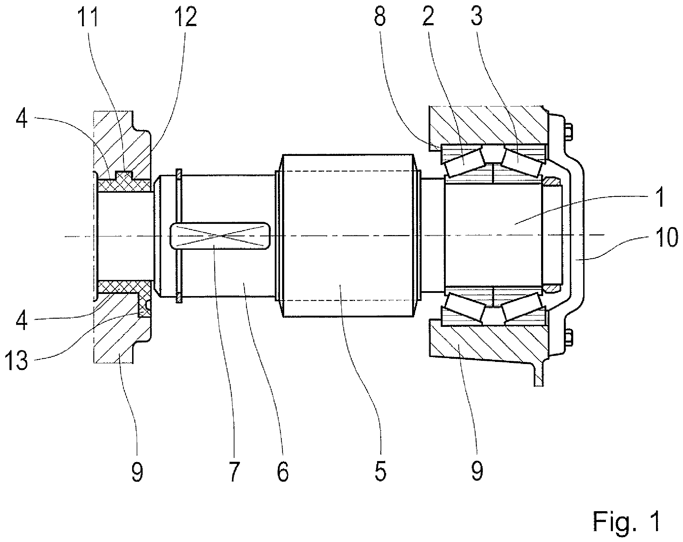

Ausführungsbeispiele der Erfindungen werden im Folgenden anhand von Fig. 1 erläutert.

Im Einzelnen zeigt:
- Fig. 1: eine wälz- und gleitgelagerte Zwischenwelle.

Zur in der Darstellung von Fig. 1 rechten Seite hin, ist die Zwischenwelle 1 mit einem Festlager gelagert. Das Festlager besteht aus einem ersten Kegelrollenlager 2 und einem zweiten Kegelrollenlager 3.

Zur linken Seite der Abbildung hin ist die Zwischenwelle 1 mittels eines Loslagers gelagert, dass durch ein Gleitlager 4 gebildet wird. Weiterhin weist die Zwischenwelle 1 ein Zahnrad 5 auf. Ein weiteres - in Fig. 1 nicht dargestelltes - Zahnrad wird auf einem Wellensitz 6 mittels einer Passfedernut 7 fixiert. In axialer Richtung sind die einzelnen Elemente auf der Zwischenwelle 1 also - in Fig. 1 von links nach rechts - wie folgt angeordnet:
Gleitlager 4, Wellensitz 6, Zahnrad 5, erstes Kegelrollenlager 2 und zweites Kegelrollenlager 3.

In axialer Richtung sind das erste Kegelrollenlager 2 und das zweite Kegelrollenlager 3 zwischen einem Absatz 8 in einem Getriebegehäuse 9 und einem auf das Getriebegehäuse 9 aufgeschraubten Lagerdeckel 10 fixiert. Dargestellt ist in Fig. 1 eine Fixierung mit Spiel. Alternativ wäre eine Fixierung ohne Spiel, d. h. mit Vorspannung möglich.

Fig. 1 zeigt zwei alternative Möglichkeiten der Fixierung des Gleitlagers 4. Wie im oberen Teil von Fig. 1 dargestellt, kann das Getriebegehäuse 9 eine kreisförmig um die Drehachse der Zwischenwelle 1 verlaufende Nut 11 aufweisen. Das Gleitlager 4 weist in diesem Fall eine auf der äußeren Fläche in Umfangsrichtung verlaufende Ausbuchtung bzw. einen auf der äußeren Fläche in Umfangsrichtung verlaufenden Grat 12 auf, der mit der Nut 11 in Eingriff steht.

Alternativ kann das Gleitlager 4, wie im unteren Bereich von Fig. 1 dargestellt, mittels eines radial ausgerichteten, kreisförmig um die Drehachse der Zwischenwelle verlaufenden Flansches, der Teil des Gleitlagers 4 ist, fixiert werden. Der Flansch 13 wird mit dem Getriebegehäuse 9 verschraubt.

### Bezugszeichen

- 1: Zwischenwelle
- 2: Kegelrollenlager
- 3: Kegelrollenlager
- 4: Gleitlager
- 5: Zahnrad
- 6: Wellensitz
- 7: Passfedernut
- 8: Absatz
- 9: Getriebegehäuse
- 10: Lagerdeckel
- 11: Nut
- 12: Grat
- 13: Flansch

## Patentansprüche

1. Getriebewelle (1), gelagert mittels eines Festlagers (2, 3) und mindestens eines Loslagers (4), mit
mindestens einem in radialer Richtung zwischen dem Festlager (2, 3) und dem Loslager (4) angeordneten, auf der Getriebewelle (1) fixierten Zahnrad (5); wobei das Festlager (2, 3) durch mindestens ein Wälzlager gebildet wird; wobei das Loslager (4) durch mindestens ein Gleitlager gebildet wird; **dadurch gekennzeichnet, dass**
das Festlager (2, 3) als angestellte Lagerung ausgeführt ist.

2. Getriebe für eine Windkraftanlage mit mindestens einer Stirnradstufe, wobei
die Stirnradstufe mindestens eine Getriebewelle (1) nach Anspruch 1 aufweist.

3. Getriebe nach Anspruch 2, **dadurch gekennzeichnet, dass** die Stirnradstufe mindestens eine Zwischenwelle (1) nach Anspruch 1 aufweist.

4. Getriebe nach Anspruch 2 oder 3, **dadurch gekennzeichnet, dass**
die Stirnradstufe eine Eingangswelle nach Anspruch 1 aufweist.

5. Getriebe nach einem der Ansprüche 2 bis 4, **dadurch gekennzeichnet, dass**
die Stirnradstufe eine Ausgangswelle nach Anspruch 1 aufweist.

## Claims

1. Transmission shaft (1), mounted by means of a locating bearing (2, 3) and at least one floating bearing (4), having
at least one gearwheel (5) which is arranged in the radial direction between the locating bearing (2, 3) and the floating bearing (4) and is fixed on the transmission shaft (1);
the locating bearing (2, 3) being formed by way of at least one anti-friction bearing;
the floating bearing (4) being formed by way of at least one plain bearing; **characterized in that** the locating bearing (2, 3) is configured as an adjusted bearing arrangement.

2. Transmission for a wind power plant having at least one spur gear stage, the spur gear stage having at least one transmission shaft (1) according to Claim 1.

3. Transmission according to Claim 2, **characterized in that** the spur gear stage has at least one intermediate shaft (1) according to Claim 1.

4. Transmission according to Claim 2 or 3, **characterized in that** the spur gear stage has an input shaft according to Claim 1.

5. Transmission according to one of Claims 2 to 4, **characterized in that** the spur gear stage has an output shaft according to Claim 1.

## Revendications

1. Arbre de transmission (1), supporté au moyen d'un palier fixe (2, 3) et au moyen d'au moins un palier libre (4), comprenant
au moins une roue dentée (5) disposée dans la direction radiale entre le palier fixe (2, 3) et le palier libre (4), fixée sur l'arbre de transmission (1) ; le palier fixe (2, 3) étant formé par au moins un palier à roulement ; le palier libre (4) étant formé par au moins un palier lisse ; **caractérisé en ce que**
le palier fixe (2, 3) est réalisé sous forme de support sur palier incliné.

2. Transmission pour une éolienne comprenant au moins un étage à pignon droit, l'étage à pignon droit présentant au moins un arbre de transmission (1) selon la revendication 1.

3. Transmission selon la revendication 2, **caractérisée en ce que** l'étage à pignon droit présente au moins un arbre intermédiaire (1) selon la revendication 1.

4. Transmission selon la revendication 2 ou 3, **caractérisée en ce que** l'étage à pignon droit présente un arbre d'entrée selon la revendication 1.

5. Transmission selon l'une quelconque des revendications 2 à 4, **caractérisée en ce que** l'étage à pignon droit présente un arbre de sortie selon la revendication 1.
